Europäisches Patentamt

European Patent Office

Office européen des brevets

(11) Veröffentlichungsnummer: **0 268 932 B1**

# EUROPÄISCHE PATENTSCHRIFT

(45) Veröffentlichungstag der Patentschrift: **24.07.91**

(51) Int. Cl.⁵: **A21C 7/00**

(21) Anmeldenummer: **87116629.4**

(22) Anmeldetag: **11.11.87**

(54) **Teigrundwirkvorrichtung.**

(30) Priorität: **24.11.86 DE 3640051**

(43) Veröffentlichungstag der Anmeldung:
**01.06.88 Patentblatt 88/22**

(45) Bekanntmachung des Hinweises auf die
Patenterteilung:
**24.07.91 Patentblatt 91/30**

(84) Benannte Vertragsstaaten:
**AT DE FR GB IT NL SE**

(56) Entgegenhaltungen:
**FR-A- 947 648**
**FR-A- 1 191 960**
**GB-A- 947 049**
**US-A- 1 881 364**

(73) Patentinhaber: **Werner & Pfleiderer GmbH**
**Theodorstrasse 10 Postfach 30 12 20**
**W-7000 Stuttgart 30(DE)**

(72) Erfinder: **Müller, Gerhard, Dipl.-Ing.**
**Südstrasse 2**
**W-7144 Asperg(DE)**

## Beschreibung

Die Erfindung bezieht sich auf eine Teiggrundwirkvorrichtung nach dem Oberbegriff des Anspruches 1.

Zu den Rundwirkvorrichtungen der vorstehend genannten Gattung gehören sowohl Wirkmaschinen gemäß DE-A 1 053 437, bei denen kreisend bewegte Wirkbecher über einem als Wirkfläche dienenden Band vorgesehen sind, als auch sog. Trommelrundwirker gemäß AT-A 222 065, welche zwei um eine gemeinsame Achse drehbare, konzentrisch ineinandergesetzte Trommeln aufweisen, von denen die äußere Trommel Wirkzellen enthält und die innere Trommel mit ihrem Mantel als Wirkfläche kreisende Bewegungen ausführt.

Bei diesen bekannten Wirkmaschinen weisen die Wirkflächen kreisförmige Wirkstellenvertiefungen auf, wie sie u.a. auch bei Wirkplatten von Messerstern-Teigteil-und Wirkmaschinen gebräuchlich sind. Obwohl diese Wirkstellenvertiefungen in ihrer Gestaltung als treppenartig gestufte konzentrische Ringe mit vorzugsweise sägezahnförmigem Profil den Teigstücken beim Rundwirken einen gewissen Halt auf der Wirkfläche zu vermitteln vermögen, genügt dies nicht den Anforderungen, die vor allem bei automatischen Teigteil-und Wirkmaschinen gestellt werden. Wenn auf derartigen Maschinen, welche in zahlreichen Fällen mit einem Trommelrundwirker gemäß AT-PS 222 065 ausgestattet sind, festerer Teig mit einer infolge ihres geringeren Wassergehaltes relativ trockenen Oberfläche verarbeitet werden, kann es vorkommen, daß die Teigstücke nicht schnell genug oder zu wenig von den Wirkstellenvertiefungen erfaßt werden. Das Ergebnis sind dann unvollständig oder überhaupt nicht gewirkte Teigstücke.

Um diesem Nachteil abzuhelfen, hat man bei Trommelrundwirkern die gesamte Oberfläche der Innentrommel mit einer Riffelung versehen. Als zusätzliche Maßnahme wurden auch noch Wirkstellenvertiefungen der oben erwähnten Art in der geriffelten Wirkfläche vorgesehen. Trotz dieser Maßnahmen konnte nicht in allen Fällen ein befriedigendes Ergebnis erzielt werden, weil infolge der überall auf der Wirkfläche vorhandenen Riffelung die Oberfläche der Teigstücke auf nahezu ihrer gesamten Auflagefläche aufgerissen wurde. Es kam deshalb nicht zur Ausbildung eines richtigen "Wirkschlußes", der für die Qualität des fertigen Gebäcks eine wichtige Rolle spielt.

Ein weiterer Nachteil der durchweg geriffelten Wirkflächen besteht darin, daß sie insbesondere bei der Verarbeitung weicher Teige schnell verschmutzen, weil in den Vertiefungen der Riffelung Teigreste und Mehlteilchen sich festsetzen, wobei letztere unter dem Einfluß der Teigfeuchtigkeit verkleistern und zu einem festhaftenden Überzug führen. Es müssen deshalb die Wirktrommeln häufig und mit erheblichem Aufwand gereinigt werden, woraus wiederum lange Betriebsunterbrechungen resultieren.

Der Erfindung liegt die Aufgabe zugrunde, Teiggrundwirkvorrichtungen der eingangs genannten Gattung dahingehend zu verbessern, daß bei allen für die Bearbeitung in Betracht kommenden Teigen ein einwandfreies Wirkergebnis erzielt und die Gefahr der Verschmutzung reduziert wird.

Diese Aufgabe wird erfindungsgemäß mit den Merkmalen des Kennzeichnungsteiles des Anspruches 1 gelöst. Die Lösung beruht einerseits auf der Erkenntnis, daß in den kreisförmigen Wirkstellenvertiefungen und einem sich daran anschließenden Bereich der Wirkfläche, auf dem sich das Teigstück während des Wirkens abwälzt, praktisch keine Verschmutzung stattfindet. Dieser Selbstreinigungseffekt beruht wahrscheinlich darauf, daß etwaige in die Vertiefungen der Aufrauhung gelangte Teig-oder Mehlteilchen sich dort nicht absetzen können, weil sie dem darüber gewälzten und zeitweise in die Vertiefungen eindringenden Teigstück anhaften und von diesem mitgenommen werden. Andererseits wurde erkannt, daß die Aufrauhung der Wirkfläche in einem an die Wirkstellenvertiefung unmittelbar anschließenden Bereich die aktive Wirkzone gegenüber einer Wirkfläche, die nur eine Wirkstellenvertiefung aufweist, vergrößert und so für eine sichere Mitnahme bei relativ festen Teigstücken sorgt. Durch die Begrenzung dieses Bereichs ist verhindert, daß der Boden des Teigstücks zu sehr aufreißt und sich nicht mehr zu einem "Schluß" formen läßt. Da außerhalb des Bereichs der Aufrauhung die Wirkfläche glatt ist, lassen sich allfällige Reinigungsarbeiten ohne großen Aufwand erledigen. Die erfindungsgemäßen Merkmale stellen eine optimale Kombination für das Rundwirken sowohl fester als auch weicher Teige dar.

Weitere Merkmale und Vorteile der Erfindung ergeben sich aus den Unteransprüchen und der nachfolgenden Beschreibung eines Ausführungsbeispiels anhand der Zeichnung. Es zeigt

Fig. 1    einen senkrechten Schnitt durch eine Teiggrundwirkvorrichtung in vereinfachter Darstellung,

Fig. 2    eine Draufsicht auf einen Teil der Vorrichtung nach Fig. 1 und

Fig. 3    einen der Fig. 1 ähnlichen senkrechten Schnitt durch einen Teil eines Trommelrundwirkers.

Die Teiggrundwirkvorrichtung besteht im wesentlichen aus zwei relativ zueinander kreisende Bewegungen ausführenden Baugruppen 1 und 2, von denen nur die wesentlichen Bestandteile ohne Gestell, Antrieb und dgl. dargestellt sind.

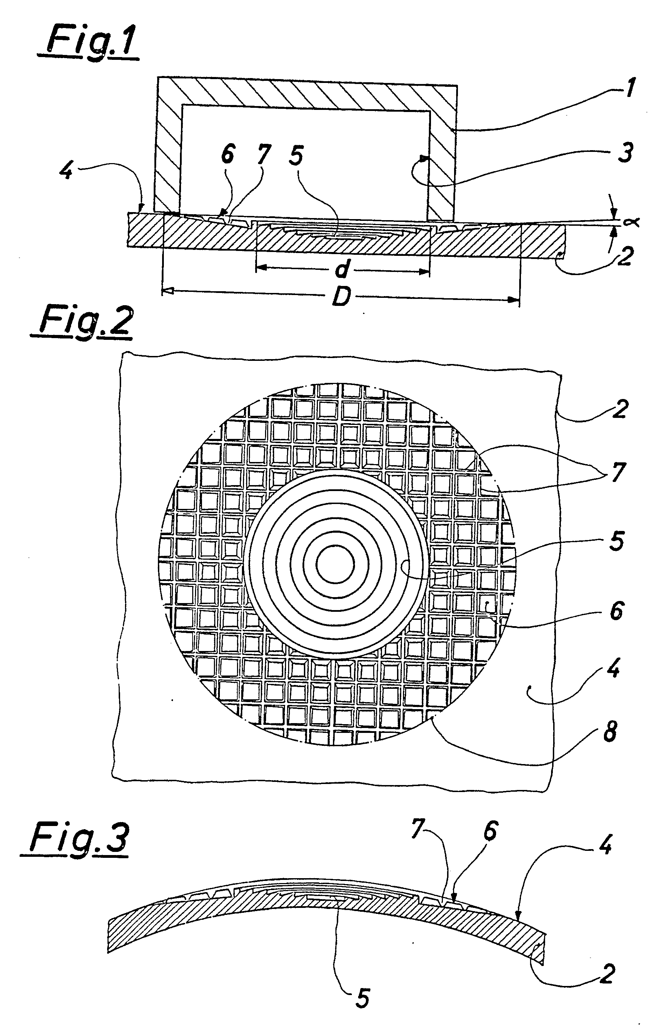

In der Baugruppe 1 sind Ausnehmungen 3 zur Aufnahme von Teigstücken vorgesehen, wobei diese Ausnehmungen irgendeine an sich bekannte Gestaltung aufweisen können. Die Ausnehmungen 3 sind beispielsweise Wirkbecher oder Wirknäpfe, die in Querreihen an einem Träger befestigt sind, welcher die kreisenden Bewegungen stets parallel zu sich selbst ausführt (Fig. 1). Bei einem Trommelrundwirker stellt die Außentrommel die Baugruppe 1 dar und die Ausnehmungen 3 entsprechen dann den Wirkzellen in dieser Trommel.

Die Baugruppe 2 weist eine den Öffnungen der Ausnehmungen 3 bis auf einen Bewegungsspalt dicht gegenüberstehende Wirkfläche 4 auf. Im Zentrum der kreisenden Bewegung jeder Ausnehmung 3 ist in der Wirkfläche 4 eine an sich bekannte kreisförmige Wirkstellenvertiefung 5 vorgesehen, welche aus treppenartig gestuften Ringflächen mit scharfen Kanten besteht, wobei die Ringflächen nach außen geneigt sind, so daß im Querschnitt jede Stufe ein sägezahnförmiges Profil aufweist. Die Wirkfläche 4 gemäß Fig. 1 ist eine ebene Fläche, die zum Beispiel die Oberfläche eines schrittweise bewegten Wirkbandes darstellt, über dem Wirkbecher oder Wirknäpfe kreisende Bewegungen ausführen. Dabei kann das Wirkband die Gestalt eines Lattenbandes aufweisen, auf deren gelenkig miteinander verbundenen Latten jeweils eine Reihe von Wirkstellenvertiefungen angebracht ist. Die Baugruppe 2 mit ihrer Wirkfläche 4 kann aber auch die kreisenden Wirkbewegungen ausführen. Dies ist insbesondere bei Trommelrundwirkern der Fall, bei denen sich die Wirkfläche auf einer koaxial zur Außentrommel angeordneten Innentrommel befindet. Eine derartige Wirkfläche 4 mit kreisbogenförmiger Krümmung ist in Fig. 3 dargestellt.

In einem die kreisförmige Wirkstellenvertiefung 5 unmittelbar umgebenden begrenzten Bereich weist die Wirkfläche eine Aufrauhung 6 auf. Als Aufrauhung ist dort jede Art der Unterbrechung der glatten Oberfläche der Baugruppe 2, durch die den Teigstücken ein gewisser Halt verschafft wird, anwendbar. Zweckmäßig ist jedoch eine Riffelung, die aus einer Vielzahl sich kreuzender und die Wirkfläche 4 unterbrechender Rillen 7 gebildet ist. Vorzugsweise kreuzen sich die Rillen 7 rechtwinkelig, wie dies in Fig. 2 gezeigt ist. Außerdem weisen die Rillen 7 geneigte Flanken auf. Diese Maßnahmen fördern die Selbstreinigung der Wirkfläche.

Um den Teigstücken über die Wirkstellen 5 hinaus einen zusätzlichen Halt zu vermitteln, genügt ein Bereich der Aufrauhung 6, der nach außen durch einen in Fig. 2 mit einer strichpunktierten Linie angedeuteten und mit den Wirkstellen 5 konzentrischen Kreis 8 begrenzt ist, dessen Durchmesser D das 1,6 - 2,2 fache des Durchmessers d der Wirkstellenvertiefung 5 beträgt. Diese Durchmesser D und d sind in Fig. 1 eingetragen. Der Durchmesser d der Wirkstellenvertiefung entspricht ungefähr dem Durchmesser des Kreises, auf dem sich die Baugruppen 1 und 2 relativ zueinander bewegen.

Wie aus den Fig. 1-3 zu erkennen ist, nimmt die Tiefe der Rillen 7 vom Rand der Wirkstellenvertiefung 5 nach außen hin ab, bis die Rillen an ihrem Schnittpunkt mit dem Kreis 8 in die glatte Wirkfläche 4 auslaufen. Mit dieser Gestaltung wird erreicht, daß die Stärke der Aufrauhung 6 von innen nach außen stetig bis auf Null abnimmt und damit auch die Einwirkung auf das Teigstück sich nach außen hin allmählich abschwächt. Diese Maßnahme verbessert nicht nur das Wirkergebnis, sondern begünstigt auch die Selbstreinigung. Dieser Doppeleffekt wird noch verstärkt, wenn die Wirkfläche 4 in dem eine Aufrauhung aufweisenden Bereich, d.h. also ab dem Kreis 8 gegen die Wirkstellenvertiefung 5 geneigt ist, wobei der in Fig. 1 eingezeichnete Neigungswinkel $\alpha$ der Wirkfläche 4 in diesem Bereich 1-10° beträgt.

Die in Fig. 3 dargestellte Ausführungsform entspricht hinsichtlich der Gestaltung der Rillen 7 und der Neigung der Wirkfläche 4 im Bereich der Aufrauhung 6 den Verhältnissen der Fig. 1. Sie stellt gewissermaßen einen Gegenstand gemäß Fig. 1 dar, der kreisbogenförmig gekrümmt wurde und in der Draufsicht annähernd der Fig. 2 entspricht.

## Patentansprüche

1. Teigrundwirkvorrichtung mit zwei relativ zueinander kreisende Bewegungen ausführenden Baugruppen (1,2), von denen die eine (1) Ausnehmungen (3) zur Aufnahme der Teigstücke aufweist und die andere (2) in ihrer den Öffnungen der Ausnehmungen (3) gegenüberstehenden Wirkfläche (4) mit kreisförmigen Wirkstellenvertiefungen (5) versehen ist, dadurch gekennzeichnet, daß die Wirkfläche (4) jeweils in einem die Wirkstellenvertiefungen (5) unmittelbar umgebenden begrenzten Bereich eine Aufrauhung (6) aufweist.

2. Teigrundwirkvorrichtung nach Anspruch 1, dadurch gekennzeichnet, daß der Bereich der Aufrauhung (6) nach außen durch einen mit der Wirkstellenvertiefung (5) konzentrischen Kreis (8) begrenzt ist, dessen Durchmesser (D) das 1,6 - 2,2 fache des Durchmessers (d) der Wirkstellenvertiefung (5) beträgt.

3. Teigrundwirkvorrichtung nach Anspruch 1 oder 2, dadurch gekennzeichnet, daß die Aufrauhung (6) aus einer Vielzahl sich kreuzender und die Wirkfläche unterbrechender Rillen (7) gebildet ist.

4. Teigrundwirkvorrichtung nach Anspruch 3, dadurch gekennzeichnet, daß die Tiefe der Rillen

(7) vom Rand der Wirkstellenvertiefung (5) weg nach außen abnimmt.

5. Teigrundwirkvorrichtung nach Anspruch 3 oder 4, dadurch gekennzeichnet, daß die Rillen (7) geneigte Flanken aufweisen.

6. Teigrundwirkvorrichtung nach einem der Ansprüche 1 bis 5, dadurch gekennzeichnet, daß die Wirkfläche (4) in den eine Aufrauhung (6) aufweisenden Bereichen gegen die Wirkstellenvertiefungen (5) geneigt ist.

7. Teigrundwirkvorrichtung nach Anspruch 6, dadurch gekennzeichnet, daß die Wirkfläche (4) im Bereich der Aufrauhung (6) einen Neigungswinkel ($\alpha$) von 1 - 10° aufweist.

## Claims

1. Dough-rounding device with two sub-assemblies (1, 2), which execute circular movements each relative to the other and of which the one (1) displays recesses (3) for the reception of the dough pieces and the other (2) is provided with circular kneading place depressions (5) in its kneading surface (4) standing opposite the openings of the recesses (3), characterised thereby, that the kneading surface (4) displays a roughening (6) each time in a limited region directly surrounding the kneading place depression (5).

2. Dough-rounding device according to claim 1, characterised thereby, that the region of the roughening (6) is bounded outwardly by a circle (8), which is concentric with the kneading place depression (5) and the diameter (D) of which amounts to 1.6 to 2.2 times the diameter (d) of the kneading place depression (5).

3. Dough-rounding device according to claim 1 or 2, characterised thereby, that the roughening (6) is formed of a plurality of mutually crossing grooves (7) interrupting the kneading surface.

4. Dough-rounding device according to claim 3, characterised thereby, that the depth of the grooves (7) reduces outwardly from the rim of the kneading place depression (5).

5. Dough-rounding device according to claim 3 or 4, characterised thereby, that the grooves (7) display inclined sides.

6. Dough-rounding device according to one of the claims 1 to 5, characterised thereby, that the kneading surface (4) is inclined in the regions, which display a roughening (6), relative to the kneading place depressions (5).

7. Dough-rounding device according to claim 6, characterised thereby, that the kneading surface (4) displays a slope angle ($\alpha$) of 1 to 10° in the region of the roughening (6).

## Revendications

1. Dispositif de pétrissage rotatif de pâte comportant deux ensembles (1, 2) qui exécutent des déplacements circulaires l'un par rapport à l'autre, dont l'un (1) présente des cavités (3) destinées à recevoir les portions de pâte, et dont l'autre (2) est muni de creux (5) servant d'emplacement de pétrissage, de forme circulaire, dans sa surface (4) de pétrissage située en face des ouvertures des cavités (3), dispositif caractérisé en ce que la surface (4) de pétrissage présente une partie striée (6) dans chacune des zones limitées entourant immédiatement les creux (5) servant d'emplacement de pétrissage.

2. Dispositif de pétrissage rotatif de pâte selon la revendication 1, caractérisé en ce que la zone de la partie striée (6) est délimitée par un cercle (8), concentrique au creux (5) servant d'emplacement de pétrissage et dont le diamètre (D) a une dimension valant 1,6 à 2,2 fois celle du diamètre (d) du creux (5) servant d'emplacement de pétrissage.

3. Dispositif de pétrissage rotatif de pâte selon la revendication 1 ou 2, caractérisé en ce que la partie striée (6) est formée par un grand nombre de rainures (7) qui se croisent et qui créent des interruptions dans la surface de pétrissage.

4. Dispositif de pétrissage rotatif de pâte selon la revendication 3, caractérisé en ce que la profondeur des rainures (7) diminue vers l'extérieur, à partir du bord du creux (5) servant d'emplacement de pétrissage.

5. Dispositif de pétrissage rotatif de pâte selon la revendication 3 ou 4, caractérisé en ce que les rainures (7) présentent des flancs inclinés.

6. Dispositif de pétrissage rotatif de pâte selon une des revendications 1 à 5, caractérisé en ce que la surface (4) de pétrissage est inclinée dans les zones de parties striées (6), en direction des creux (5) servant d'emplacement de pétrissage.

7. Dispositif de pétrissage rotatif de pâte selon la revendication 6, caractérisé en ce que la surface (4) de pétrissage présente, dans la zone de la partie striée (6), un angle (α) d'inclinaison de 1° à 10°.

_Fig.1_

_Fig.2_

_Fig.3_